# EUROPÄISCHE PATENTSCHRIFT

(11) **EP 0 532 993 B1**
(45) Veröffentlichungstag und Bekanntmachung des Hinweises auf die Patenterteilung: **19.04.1995**
(21) Anmeldenummer: 92115150.2
(22) Anmeldetag: 04.09.1992
(51) Int. Cl.: C01B 25/36, C01B 39/54

(54) **Verfahren zur Herstellung von Alumo- und Silicoalumophosphaten mit AEL-Struktur unter Verwendung von 1,2-Bis(4-pyridyl)ethan**
Process for the preparation of alumino- and silicoaluminophosphates having AEL-structure by use of 1,2-bis(4-pyridyl)ethane
Procédé de préparation d'alumino- et de silicoaluminophosphates de structure AEL par utilisation de 1,2-bis(4-pyridyl)éthane

(30) Priorität: 20.09.1991 DE 4131268
(43) Veröffentlichungstag der Anmeldung: 24.03.1993
(73) Patentinhaber: BASF Aktiengesellschaft, 67063 Ludwigshafen (DE)
(72) Erfinder: Müller, Ulrich, Dr., W-6730 Neustadt (DE); Hoelderich, Wolfgang, Dr., W-6710 Frankenthal (DE); Lauth, Günter, Dr., W-6711 Grosskarlbach (DE)

(56) Entgegenhaltungen:
- EP-A- 0 417 863
- FR-A- 2 381 715
- US-A- 4 385 994

## Beschreibung

Die vorliegende Erfindung betrifft ein neues Verfahren zur Herstellung von Alumo- und Silicoalumophosphaten mit AEL-Struktur unter Verwendung von 1,2-Bis(4-pyridyl)ethan.

Die Bezeichnung AEL-Struktur steht für einen Kristallstrukturtyp, der in Meier und Olson ("Atlas of Zeolite Structure Types", 2nd Ed., Butterworths, London, 1987) klassifiziert ist.

Aus der US-A-4,440,871 und US-A-4,385,994 sind Methoden zur Herstellung von Alumo- und Silicoaluminophosphaten mit AEL-Struktur bekannt, die bei der Kristallisation beispielsweise Di-n-propylamin als strukturbildende Schablonenverbindung verwenden.

Ferner ist nach Wilson und Flanigen (A.C.S. Symp. Ser., Vol. 398 (1989), Tabelle V, S 338) bekannt, daß unter Verwendung von Di-n-propylamin als organischer Schablonenverbindung die Synthese von mindestens sieben strukturell verschiedenen Phosphaten, u.a. die Strukturtypen AlPO₄-11, -31, -39, -43, -46, und -50 möglich ist.

Davis et. al. (A.C.S. Symp. Ser., Vol. 398 (1989), 291 bis 304) beschrieben darüberhinaus die Herstellung eines superweitporigen Alumophosphats VPI-5 unter Verwendung von Di-n-propylamin als organischem Strukturbildner.

Nachteilig bei diesen Verfahren ist, daß man die Herstellung der gewünschten Phosphate nur in einem engen Bereich, beispielsweise hinsichtlich der einzuhaltenden Kristallisationszeit und Synthesetemperatur erreichen kann und daß man nur mit einem erhöhten Arbeitsaufwand das Auftreten von Phasenmischungen vermeiden und somit eine reproduzierbare Produktqualität erzielen kann.

Der vorliegenden Erfindung lag daher die Aufgabe zugrunde ein Verfahren zu finden, das den zuvor genannten Nachteilen abhilft.

Demgemäß wurde ein neues und verbessertes Verfahren zur Herstellung von Alumophosphaten und Silicioaluminophosphaten mit AEL-Struktur unter hydrothermalen Kristallisationsbedingungen gefunden, welches dadurch gekennzeichnet ist, daß man 1,2-Bis(4-pyridyl)ethan zur Kristallisation verwendet.

Das Herstellverfahren zur Kristallisation von Aluminium- und Siliciumaluminiumphosphaten mit AEL-Struktur unter Verwendung von 1,2-Bis(4-pyridyl)ethan kann wie folgt durchgeführt werden:
Die Alumo- und Silicoalumophosphate erhält man z.B. durch Kristallisation aus einem wäßrigen Medium indem man eine reaktive Quelle für Aluminium, Phosphor und wahlweise Silicium unter Zusatz von dem Amin 1,2-Bis(4-pyridyl)ethan bei Temperaturen von 100 bis 250°C, bevorzugt 130 bis 230°C, besonders bevorzugt unter autogenem Druck (Eigendruck des abgeschlossenen Systems) in einem Druckbehälter für einen Zeitraum von einigen Stunden bis zu mehreren Tagen zur Reaktion bringt. Das entstandene Produkt kann nach der Umsetzung abgetrennt, gewaschen und getrocknet werden. Zur Zersetzung und Entfernung der eingeschlossenen organischen Schablonenverbindung 1,2-Bis(4-pyridyl)ethan wird das getrocknete Material vorsichtig einer Temperaturbehandlung zwischen 400°C bis 600°C mit oder ohne Luftzusatz unterzogen, wodurch man einen mikroporösen Festkörper in stickstoffreier (aminfreier) Form erhält.

Die Synthese kann z.B. in einer hydrothermalen Reaktion in Autoklavenbehältern, wahlweise statisch oder unter Rühren erfolgen. Als Einsatzstoffe verwendet man zweckmäßigerweise Phosphorsäure, pyrogene Kieselsäure wie beispielsweise hochreines Siliciumdioxid mit folgenden Spezifikationen:
z.B. Aerosil®200, SiO₂ > 99,8 %, 200 ± 25 m²/g Oberfläche nach BET und als Quelle für Aluminiumoxid Pural SB® als Pseudoböhmit, als strukturdirigierendes Amin 1,2-Bis(4-pyridyl)ethan und Wasser, bevorzugt destilliertes oder deionisiertes Wasser.

Die Reaktionsmischungen, die zur Kristallisation gebracht werden, enthalten die Oxide im molaren Verhältniss von:

Al₂O₃: (1 +/- 0,3) P₂O₅: (30 bis 100) H₂O

mit 1,2-Bis-(4-pyridyl)ethan/P₂O₅ = 0,3 : 1 bis 1,5 : 1, vorzugsweise von 0,3 : 1 bis 0,6 : 1. Bei der Herstellung von Silicoalumophosphaten liegt das molare Verhältnis bei Si/Al = 0,001 : 1 bis 0,5 : 1, bevorzugt aber von 0,005 : 1 bis 0,25 : 1.

Bei den vorgenannten Temperaturen erfolgt die Kristallisation in aller Regel innerhalb von 24 bis 150 Stunden, vorteilhafterweise innerhalb von 48 bis 96 Stunden. Das erkaltete Reaktionsgemisch wird abfiltriert, der das Reaktionsprodukt enthaltende Filterkuchen wird mehrfach mit Wasser neutralgewaschen und anschließend bei 70 bis 200°C, bevorzugt bei 100 bis 150°C, besonders bevorzugt bei 110 bis 130°C, getrocknet.

Die Alumophosphate haben in der oxidischen Form folgende molare Zusammensetzung:

m R : Al₂O₃ : P2O5 : n H₂O,

wobei R 1,2-Bis(4-pyridyl)ethan ist, welches sich nach der Kristallisation mit dem Anteil m = 0,01 bis 0,1, bevorzugt 0,02 bis 0,07, besonders bevorzugt 0,03 bis 0,06 in dem mikroporösen Hohlraumsystem befindet. Das Amin 1,2-Bis(4-pyridyl)ethan wirkt als Schablonenverbindung.

Die Siliciumaluminiumphosphate haben in der oxidischen Form folgende molare Zusammensetzung:

m R : y Al₂O₃ : z P₂O₅ : x SiO₂ : n H₂O,

wobei y = 0,25 bis 0,45, bevorzugt 0,3 bis 0,4, besonders bevorzugt 0,32 bis 0,38, z = 0,2 bis 0,5, bevorzugt 0,3 bis 0,4, besonders bevorzugt 0,33 bis 0,37 und x = 0 bis 0,15, bevorzugt 0,02 bis 0,11, besonders bevorzugt 0,06 bis 0,09 für die molaren Anteile von Aluminium, Phosphor und Silicium im dreidimensional kristallinen Tetraedergitter stehen und m die obengenannte Bedeutung hat.

Die mikroporösen Festkörper weisen molare Verhältnisse der Oxide von Al₂O₃/P₂O₅ = 1,0 +/- 0,2 für Alumophosphate mit AEL-Struktur und von (SiₓAl_{y}P_{z})O2 mit x = 0,001 bis 0,2, vorzugsweise 0,001 bis 0,1, y = 0,4 bis 0,5, vorzugsweise 0,45 bis 0,49 und z = 0,4 bis 0,5, vorzugsweise 0,45 bis 0,49 für Silicoalumophosphate mit AEL-Struktur auf.

Zur Entfernung der im kristallinen Produkt verbliebenen organischen Schablonenverbindung 1,2-Bis(4-pyridyl)ethan , wird das so getrocknete Material abschließend noch einer Temperaturbehandlung bei 400 bis 600°C, vorzugsweise bei 450 bis 550°C z.B. für die Dauer von 8 bis 24 Stunden mit oder ohne Luftzusatz unterzogen.

Die so erhaltenen erfindungsgemäßen kristallinen mikroporösen Phosphate besitzen ein Kristallgitter, welches aus TO₄-Tetraedern aufgebaut ist, wobei als Tetraederatome T Phosphor und Aluminium auftreten.

Die Charakterisierung der kristallinen Bestandteile erfolgt mit Hilfe der Röntgenpulverdiffraktometrie. Dabei enthalten die Diffraktogramme der nach dem erfindungsgemäßen Verfahren hergestellten Aluminium- und Siliciumaluminiumphosphate mindestens die in Tabelle 1 angegebenen Netzebenenabstände (d-Werte in Angström).

**Tabelle 1**

| Winkel 2THETA | d-Werte (Anström) | Intensität (100 I/I°) |
|---|---|---|
| 8,0 - 8,2 | 11,1 - 10,6 | 6 - 10 |
| 9,5 - 9,8 | 9,0 - 9,8 | 20 - 50 |
| 19,4 - 19,5 | 4,5 - 4,55 | 15 - 35 |
| 19,8 - 20,5 | 4,4 - 4,48 | 20 - 50 |
| 21,8 - 22,0 | 4,06 - 4,05 | 100 |
| 22,4 - 22,5 | 3,95 - 3,96 | 30 - 75 |
| 23,4 - 23,5 | 3,77 - 3,79 | 10 - 70 |

Die Charakterisierung der Sorptionseigenschaften der temperaturbehandelten Materialien erfolgt durch Messung der Adsorptionsisotherme mit Stickstoff bei einer Temperatur von 77 K nach einem kontinuierlichen, volumetrischen Verfahren (ASAP 2400®, Micromeritics). Dabei zeigen die nach dem erfindungsgemäßen Verfahren hergestellten Alumo- und Silicoalumophosphate einen typischen Typ-I Isothermenverlauf (Sing, Everett, Haul, Moscou, Pierotti, Rouquerol, Siemieniewska, Pure & Appl. Chem., Vol. 57 (4), 603 bis 619 (1985)). Bei der Berechnung einer äquivalenten spezifischen Oberfläche nach der BET-Methode (Brunauer, Emmett, Teller, J. Amer. Chem. Soc., Vol. 60, 309 bis 319 (1938)) sind die Materialien gekennzeichnet durch Werte ihrer Oberfläche von 120 bis 250 m²/g, vorzugsweise aber von 130 bis 220 m²/g.

Bei der Verwendung von 1,2-Bis-(4-pyridyl)ethan als strukturdirigierendes Templat kann man die Synthese von Alumo- und Silicoalumophosphaten mit AEL-Struktur nunmehr in einem breit wählbaren Temperaturbereich durchführen. Verunreinigungen und kristalline Fremdphasen, wie sie bei der Verwendung von Di-n-propylamin als Strukturbildner auftreten können, werden nach dem erfindungsgemäßen Verfahren nicht mehr festgestellt.

Die erfindungsgemäß hergestellten Aluminium- und Siliciumaluminiumphosphate mit AEL-Struktur können als Katalysatoren eingesetzt werden z.B. zur Doppelbindungsisomerisierung, Skelettisomerisierung wie der Beckmann-Umlagerung (Cycloalkanonoxim zum Lactam), Methanolumwandlung zu Olefinen, Dehydratisierung von Alkoholen zu Olefinen, von Säureamiden zu Nitrilen, von Aldehyden zu Dienen, nucleophilen Substitution wie der Aminierung von Alkoholen wie beispielsweise Methanol zu Methylaminen, und der elektrophilen Substitution wie der Alkylierung von Aromaten. Weitere katalytische Anwendungen sind die Etherspaltung unter Eliminierung eines Alkohols, wie bei den Reaktionen von: 1,1-Dimethoxyethan zu Methyl-vinylether und Methanol, 1,1-Dimethoxy-2-methylpropan zu 1-Methoxy-2-methyl-prop-1-en und Methanol, 1,1-iso-Propoxybutan zu 1-iso-Propoxybut-1-en und Isopropanol, zu 1,1-Dimethoxy-2-phenylethan zu 1-Methoxystyrol und Methanol, 1,1,3,3-Tetramethoxypropan zu 3-Methoxyacrolein und Methanol, Dialkoxyalkansäureester zu Alkoxyalkensäureester und Alkohol, und von Trimethoxyethan zu Dimethoxyethen und Methanol. Die nach dem erfindungsgemäßen Verfahren erhaltenen Materialien können eingesetzt werden als Crack-Katalysatoren, als Dewaxing-Katalysatoren oder als Katalysatoren zur: Aromatisierung von Alkenen wie beispielsweise Buten-1 und Propen, Dehydrocyclisierung von Alkanen wie Propan oder Hexan zu Aromaten, Disproportionierung wie von Toluol zu Xylol und Benzol oder Ethylbenzol zu Diethylbenzol und Benzol, Aldolkondensation wie von Aceton zu Mesityloxid bzw. nach Edelmetalldotierung und unter hydrierenden Bedingungen zu Methylisobutylketon, Kondensation von Aldehyden/Ketonen mit Aromaten, Herstellung von Triethylendiamin und anderer cyclischer Amine z. B. aus Diaminoethan oder Hydroxyethylpiperazin oder Diethanolamin oder Monoethanaolamin oder Piperazin, und zur Umlagerung von Epoxiden wie von Styroloxiden zu Phenylacetaldehyden.

Die nachfolgenden Beispiele sollen die Erfindung näher erläutern.

### Beispiele

### Beispiel 1

Dieses Beispiel verdeutlicht die Kristallisation von Alumophosphaten mit AEL-Struktur unter Verwendung von 1,2-Bis-(4-pyridyl)ethan.

In einen Teflonbecher eines 300 ml fassenden Laborautoklaven legt man 114 g vollentsalztes Wasser vor und setzt 22,7 g Pseudoböhmit (Pural SB®, Condea) zu. Unter Rühren bei 500 U/min wird zu der entstandenen Suspension 40 g Phosphorsäure (85 Gew.-%) zugefügt. Nach beendeter Zugabe wird mit einem Eisbad auf Raumtemperatur abgekühlt und abschließend mit 16,1 g 1,2-Bis-(4-pyridyl)ethan versetzt, wonach die gesamte Ansatzmischung unter Rühren bei 500 U/min homogenisiert wird.

Die Kristallisation erfolgt bei 160°C innerhalb von 70 Stunden. Das kristalline Produkt wird abfiltriert, neutralgewaschen und bei 110°C innerhalb von 24 Stunden getrocknet.

Das getrocknete Produkt wird für die Dauer von 5 Stunden bei 500°C unter Luftatmosphäre temperaturbehandelt. Der Gewichtsverlust bezogen auf die eingesetzte Substanzmenge beträgt 10,0 Gew.-%. Die chemische Analyse ergab eine Zusammensetzung von 40,5 Gew-% Al₂O₃ und 57,1 Gew-% P₂O₅. Die Ausbeute auf eingesetztes Aluminiumoxid bezogen betrug 90%.

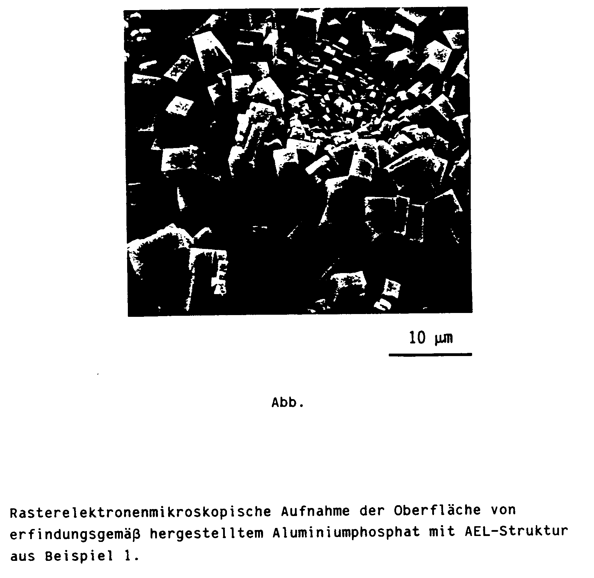

Durch Röntgendiffraktometrie wurde nachgewiesen, daß es sich bei dem so erhaltenen Produkt um reines Alumophosphat mit AEL-Struktur handelt. Die Sorptionseigenschaften sind in Tabelle 3 und die Kristallinitäten sind in Tabelle 2 aufgeführt. Abbildung 1 zeigt eine rasterelektronenmikroskopische Aufnahme des nach diesem Beispiel hergestellten Produktes.

### Beispiel 2

Dieses Beispiel verdeutlicht die Kristallisation von Silicoalumophosphaten mit AEL-Struktur unter Verwendung von 1,2-Bis-(4-pyridyl)ethan.

In einen Teflonbecher eines 300 ml fassenden Laborautoklaven legt man 114 g vollentsalztes Wasser vor und setzt 22,7 g Pseudoböhmit (Pural® SB, Condea), sowie 5,3 g einer pyrogenen Kieselsäure (Aerosil® 200, Degussa) zu. Unter Rühren bei 500 U/min wird zu der entstandenen Suspension 40 g Phosphorsäure (85 Gew.-%) zugefügt. Nach beendeter Zugabe wird mit einem Eisbad auf Raumtemperatur abgekühlt und abschließend mit 16,1 g 1,2-Bis-(4-pyridyl)ethan versetzt, wonach die gesamte Ansatzmischung unter Rühren bei 500 U/min homogenisiert wird.

Die Kristallisation erfolgt bei 160°C innerhalb von 70 Stunden. Das kristalline Produkt wird abfiltriert, neutralgewaschen und bei 110°C innerhalb von 24 Stunden getrocknet.

Das getrocknete Produkt wird für die Dauer von 5 Stunden bei 500°C unter Luftatmosphäre temperaturbehandelt. Der Gewichtsverlust bezogen auf die eingesetzte Substanzmenge beträgt 9,8 Gew.-%. Die chemische Analyse ergab eine Zusammensetzung von 37,2 Gew-% Al₂O₃, 51,8 Gew-% P₂O₅ und 3,65 Gew-% SiO₂. Die Ausbeute auf eingesetztes Aluminiumoxid bezogen betrug 91%.

Durch Röntgendiffraktometrie wurde nachgewiesen, daß es sich bei dem so erhaltenen Produkt um Silicoalumophosphat mit AEL-Struktur handelt. Die Kristallinitäten sind in Tabelle 2 und die Sorptionseigenschaften sind in Tabelle 3 aufgeführt.

**Tabelle 2**

| Röntgenkristallinitäten der Produkte aus Beispielen 1 bis 5 (Intensitätssumme im Winkelbereich von 18 bis 25° 2THETA) | | | | | |
|---|---|---|---|---|---|
| Beispiel | 1 | 2 | 3 | 4 | 5 |
| Kristallinität | 100 % | 96 % | 90 % | 97 % | 86 % |

**Tabelle 3**

| Sorptionsdaten aus Messsungen der Stickstoffadsorption | | | | | | |
|---|---|---|---|---|---|---|
| Beispiel | 1 | 2 | 3 | 4 | 5 | 6 |
| Einwaage (g) | 0,332 | 0,350 | 0,416 | 0,276 | 0,788 | 0,521 |
| BET-Oberfläche (m²/g) | 138 | 176 | 173 | 133 | 187 | 83 |
| Isothermen-Typ | I | I | I | I | I | I, IV |

### Beispiel 3

Dieses Beispiel verdeutlicht die Kristallisation von Silicoalumophosphaten mit AEL-Struktur unter Verwendung von 1,2-Bis-(4-pyridyl)ethan für längere Kristallisationszeiten und höhere Synthesetemperaturen.

Es wurde eine Reaktionsmischung nach der im Beispiel 2 angegebenen Weise hergestellt. Abweichend davon betrug die Kristallisationszeit 90 Stunden und die Synthesetemperatur 200°C.

Die Aufarbeitung erfolgte wie in Beispiel 2 beschrieben. Das getrocknete Produkt wird für die Dauer von 5 Stunden bei 500°C unter Luftatmosphäre temperaturbehandelt. Der Gewichtsverlust bezogen auf die eingesetzte Substanzmenge beträgt 9,9 Gew.-%. Die chemische Analyse ergab eine Zusammensetzung von 36,4 Gew-% Al₂O₃, 6 Gew-% P₂O₅ und 2,29 Gew-% SiO₂. Die Ausbeute auf eingesetztes Aluminiumoxid bezogen betrug 86%.

Durch Röntgendiffraktometrie wurde nachgewiesen, daß es sich bei dem so erhaltenen Produkt um Silicoalumophosphat mit AEL-Struktur handelt. Die Kristallinitäten sind in Tabelle 2 und die Sorptionseigenschaften sind in Tabelle 3 aufgeführt.

### Beispiel 4

Dieses Beispiel verdeutlicht die Kristallisation von Silicoalumophosphaten mit AEL-Struktur unter Verwendung von 1,2-Bis-(4-pyridyl)ethan bei höherer Synthesetemperatur, längerer Kristallisationszeit und geringeren Mengen an SiO₂-Zusatz.

Es wurde eine Reaktionsmischung nach der im Beispiel 2 angegebenen Weise hergestellt. Abweichend davon wurden nur 2,65 g pyrogene Kieselsäure (Aerosil® 200, Degussa) zugesetzt und die Kristallisationszeit betrug 90 Stunden bei einer Synthesetemperatur von 200°C.

Die Aufarbeitung erfolgte wie in Beispiel 2 beschrieben. Das getrocknete Produkt wird für die Dauer von 5 Stunden bei 500°C unter Luftatmosphäre temperaturbehandelt. Der Gewichtsverlust bezogen auf die eingesetzte Substanzmenge beträgt 9,8 Gew.-%. Die chemische Analyse ergab eine Zusammensetzung von 38,0 Gew.-% Al₂O₃, 52,2 Gew.-% P₂O₅ und 1,83 Gew-% SiO₂. Die Ausbeute auf eingesetztes Aluminiumoxid bezogen betrug 95%.

Durch Röntgendiffraktometrie wurde nachgewiesen, daß es sich bei dem so erhaltenen Produkt um Silicomalumophosphat mit AEL-Struktur handelt. Die Kristallinitäten sind in Tabelle 2 und die Sorptionseigenschaften sind in Tabelle 3 aufgeführt.

### Beispiel 5

Dieses Vergleichsbeispiel verdeutlicht die Kristallisation von Aluminiumphosphaten mit AEL-Struktur unter Verwendung von Dipropylamin.

In einen Teflonbecher eines 300 ml fassenden Laborautoklaven legt man 13,8 g Phosphorsäure (85 Gew.-%) in 35,3 g vollentsalztem Wasser vor und setzt 8,26 g Pseudoböhmit (Pural®SB, Condea), sowie 6,1 g Dipropylamin zu. Unter Rühren bei 500 U/min wird die entstandene Suspension homogenisiert. Die Kristallisation erfolgt bei 200°C innerhalb von 24 Stunden. Das kristalline Produkt wird abfiltriert, neutralgewaschen und bei 110°C innerhalb von 24 Stunden getrocknet.

Das getrocknete Produkt wird für die Dauer von 5 Stunden bei 500°C unter Luftatmosphäre temperaturbehandelt. Der Gewichtsverlust bezogen auf die eingesetzte Substanzmenge beträgt 10,0 Gew.-%. Die Ausbeute auf eingesetztes Aluminiumoxid bezogen betrug 81%.

Durch Röntgendiffraktometrie mit einem Pulverdiffraktometer D500 (R) der Fa. Siemens unter Verwendung von CuKₐₗₚₕₐ-Strahlung wurde nachgewiesen, daß es sich bei dem Produkt um den in US-A-4,385,994 beschriebenen AlPO₄-11 handelt. Die Kristallinitäten sind in Tabelle 2 aufgeführt.

### Tabelle 2: Röntgenkristallinitäten der Produkte aus Beispielen 1 bis 5

**Tabelle 2**

| Röntgenkristallinitäten der Produkte aus Beispielen 1 bis 5 (Intensitätssumme im Winkelbereich von 18 bis 25° 2THETA) | | | | | |
|---|---|---|---|---|---|
| Beispiel | 1 | 2 | 3 | 4 | 5 |
| Kristallinität | 100 % | 96 % | 90 % | 97 % | 86 % |

Deutlich erkennt man aus Tabelle 2, daß die erfindungsgemäß hergestellten Produkte aus den Beispielen 1 bis 4 gut kristallin sind und das nach dem Stand der Technik hergestellte Produkt aus Beispiel 5 darin übertreffen.

### Beispiel 6

Dieses Vergleichsbeispiel verdeutlicht die Kristallisation von Aluminiumphosphaten mit AEL-Struktur unter Verwendung von Dipropylamin bei verlängerter Kristallisationszeit.

Der Reaktionsmischung wurde wie im Beispiel 5 beschrieben hergestellt. Abweichend davon erfolgte die Kristallisation bei 200°C mit einer verlängerten Kristallisationszeit von 40 Stunden.

Das kristalline Produkt wurde abfiltriert, neutralgewaschen und bei 110°C innerhalb von 24 Stunden getrocknet.

Das getrocknete Produkt wurde für die Dauer von 5 Stunden bei 500°C unter Luftatmosphäre temperaturbehandelt. Der Gewichtsverlust bezogen auf die eingesetzte Substanzmenge beträgt 5,4 Gew.-%. Die Ausbeute auf eingesetztes Aluminiumoxid bezogen betrug 53%.

Durch Röntgendiffraktometrie wurde nachgewiesen, daß es sich bei dem Produkt um den in US-A-4,385,994 beschriebenen AlPO₄-11 handelt. Zusätzlich wurden erhebliche Anteile einer weiteren nicht identifizierten kristallinen Phase in diesem Syntheseprodukt gefunden. Dieses Beispiel zeigt, daß es bei der Verwendung von Dipropylamin nicht möglich ist, einen breiten Bereich hinsichtlich möglicher Kristallisationszeiten bei gleichzeitiger Produktreinheit von Aluminiumphosphaten mit AEL-Struktur zu erhalten.

### Beispiel 7

Dieses Beispiel verdeutlicht die Sorptionseigenschaften der in den Beispielen 1 bis 4 nach dem erfindungsgemäßen Verfahren hergestellten Molekularsiebe mit AEL-Struktur, sowie der in Beispiel 5 und 6 mit Dipropylamin nach dem Stand der Technik hergestellten Produkte.

**Tabelle 3**

| Sorptionsdaten aus Messsungen der Stickstoffadsorption | | | | | | |
|---|---|---|---|---|---|---|
| Beispiel | 1 | 2 | 3 | 4 | 5 | 6 |
| Einwaage (g) | 0,332 | 0,350 | 0,416 | 0,276 | 0,788 | 0,521 |
| BET-Oberfläche (m²/g) | 138 | 176 | 173 | 133 | 187 | 83 |
| Isothermen-Typ | I | I | I | I | I | I, IV |

Alle Messungen der Stickstoffadsorption erfolgten bei einer Temperatur von 77 K mit einem ASAP® 2400 der Firma Micromeritics. Vor den einzelnen Bestimmungen wurden die Proben bei einer Temperatur von 200°C unter einem Vakuum von < 0.08 mbar entgast.

Aus der Tabelle erkennt man, daß die erfindungsgemäß hergestellten Aluminiumphosphate und Siliciumaluminiumphosphate mit AEL Struktur (Beispiele 1 bis 4) als mikroporöse Adsorbentien eingesetzt werden können.

### Beispiele 8 bis 11

Zur Veranschaulichung der Verwendung der erfindungsgemäßen Phosphate mit AEL-Struktur als Katalysatoren wurden die nachfolgenden Umsetzungen vorgenommen.

Diese Reaktionen in der Gasphase werden unter isothermen Bedingungen in einem Rohrreaktor (Wendel, 0,6 cm Innendurchmesser, 90 cm Länge) im Verlauf von mindestens 6 Stunden durchgeführt. Die Reaktionsprodukte werden durch übliche Methoden abgetrennt und charakterisiert. Die quantitative Bestimmung der Reaktionsprodukte, sowie der Ausgangsprodukte erfolgte gaschromatographisch. Die GC-Analysen erfolgen nach 6 Stunden.

Das nach Beispiel 2 hergestellte Silicoaluminophosphat mit AEL-Struktur wird mit einem Verstrangungshilfsmittel zu 3 mm Strängen verformt, bei 120°C für 16 Stunden getrocknet und abschließend bei 500°C für 4 Stunden temperaturbehandelt. Dieser Katalysator wird für folgende Reaktionen eingesetzt.
- Reaktion A:: 1,1-Dimethoxyethan zu Methylvinylether und Methanol.
- Reaktion B:: 1,1-Dimethoxy-2-phenylethan (mit THF 50:50 verdünnt) zu 1-Methoxystyrol und 3-Methanol.
- Reaktion C:: 1,1,3,3,-Tetramethoxypropan (mit Wasser gesättigt, ca. 4 Gew.-%) zu 3-Methoxyacrolein und 3 Methanol.
- Reaktion D:: Trimethoxyethan (mit THF 50:50 verdünnt) zu 1,2-Dimethoxyethen und Methanol.

Die Ergebnisse sind in Tabelle 4 zusammengefaßt.

**Tabelle 4**

| Beispiel | 8 | 9 | 10 | 11 |
|---|---|---|---|---|
| Reaktion | A | B | C | D |
| Temperatur | 300°C | 300°C | 300°C | 300°C |
| WHSV (h⁻¹) | 2 | 2 | 2 | 2 |
| Umsatz % | 100 | 100 | 24 | 70 |
| Selektivität | 96 | 94 | 82 | 93 |

### Beispiel 12

Dieses Beispiel verdeutlicht die katalytische Anwendbarkeit der erfindungsgemäß hergestellten Siliciumaluminiumphosphate zur katalytischen Umlagerung von Cyclohexanonoxim zum e-Caprolactam.

Es wird der gleiche Katalysator eingesetzt, dessen Herstellung in den Beispielen 2 und 8 bis 11 beschrieben ist.

Die Umsetzung erfolgte in einem Linearreaktor (0.8 cm Innendurchmesser, 30 cm Länge) mit Vorverdampfer. Der Katalysator (1 g) wurde mit Quarz (5 g) vermischt und auf eine Temperatur von 350°C hochgeheizt. Cyclohexanonoxim wurde als Lösung (5 Gew.-%) in Toluol eingesetzt. Die WHSV betrug 10,5 h⁻¹ mit Stickstoff als Trägergas (150 ml/Minute). Die Reaktionsprodukte wurden in einer Kühlfalle bei 0°C kondensiert und aufgefangen. Die quantitative Bestimmung der Produkte und der Ausgangsstoffe erfolgte gaschromatographisch.

Die Analyse der Reaktionsprodukte zeigte einen Umsatz von 96% bei einer Selektivität zum ε-Caprolactam von 55%.

## Patentansprüche

1. Verfahren zur Herstellung von Alumophosphaten und Silicoalumophosphaten mit AEL-Struktur unter hydrothermalen Kristallisationsbedingungen, dadurch gekennzeichnet, daß man 1,2-Bis(4-pyridyl)ethan zur Kristallisation verwendet.

2. Verfahren zur Herstellung von Alumophosphaten und Silicoalumophosphaten mit AEL-Struktur unter hydrothermalen Kristallisationsbedingungen nach Anspruch 1, dadurch gekennzeichnet, daß man die Kristallisation bei Temperaturen von 100°C bis 250°C durchführt.

3. Verfahren zur Herstellung von Aluminophosphaten und Silicoalumophosphaten mit AEL-Struktur unter hydrothermalen Kristallisationsbedingungen nach Anspruch 1, dadurch gekennzeichnet, daß man das so erhaltene, gewaschene und getrocknete Material bei 400 bis 600°C tempert.

## Claims

1. A process for the preparation of an aluminophosphate or silicoaluminophosphate having the AEL structure under hydrothermal crystallization conditions, wherein 1,2-bis-(4-pyridyl)-ethane is used for the crystallization.

2. A process for the preparation of an aluminophosphate or silicoaluminophosphate having the AEL structure under hydrothermal crystallization conditions as claimed in claim 1, wherein the crystallization is carried out at from 100 to 250°C.

3. A process for the preparation of an aluminophosphate or silicoaluminophosphate having the AEL structure under hydrothermal crystallization conditions as claimed in claim 1, wherein the washed and dried material thus obtained is heated at from 400 to 600°C.

## Revendications

1. Procédé de fabrication d'alumophosphates et de silicoalumophosphates à structure AEL dans des conditions de cristallisation hydrothermiques, caractérisé en ce que l'on utilise le 1,2-bis(4-pyridyl)éthane pour la cristallisation.

2. Procédé de fabrication d'alumophosphates et de silicoalumophosphates à structure AEL dans des conditions de cristallisation hydrothermiques, suivant la revendication 1, caractérisé en ce que l'on entreprend la cristallisation à des températures de 100°C à 250°C.

3. Procédé de préparation d'aluminophosphates et de silicoalumophosphates à structure AEL dans des conditions de cristallisation hydrothermiques, suivant la revendication 1, caractérisé en ce que l'on traite la matière ainsi obtenue, lavée et séchée, à une température de 400 à 600°C.
